# EUROPEAN PATENT SPECIFICATION

(11) **EP 2 558 949 B1**
(45) Date of publication and mention of the grant of the patent: **17.09.2014**
(21) Application number: 11769272.3
(22) Date of filing: 25.03.2011
(51) Int. Cl.: G06F 15/16, G06F 9/44, G06F 11/14

(54) **EXPRESS-FULL BACKUP OF A CLUSTER SHARED VIRTUAL MACHINE**
VOLLSTÄNDIGES SCHNELL-BACKUP EINER VIRTUELLEN MASCHINE MIT GEMEINSAM GENUTZTEN CLUSTERN
SAUVEGARDE COMPLÈTE RAPIDE D'UNE MACHINE VIRTUELLE PARTAGÉE PAR UN GROUPE

(30) Priority: 12.04.2010 US 758042
(43) Date of publication of application: 20.02.2013
(73) Proprietor: Microsoft Corporation, Redmond, Washington 98052-6399 (US)
(72) Inventor: ALI, Abid, Redmond, Washington 98052-6399 (US); SINGLA, Amit, Redmond, Washington 98052-6399 (US); DHODY, Manmeet S., Redmond, Washington 98052-6399 (US); M, Arun Kumar, Redmond, Washington 98052-6399 (US); DAS, Rajsekhar, Redmond, Washington 98052-6399 (US)
(74) Representative: Grünecker, Kinkeldey, Stockmair & Schwanhäusser
(86) International application number: PCT/US2011/030062
(87) International publication number: WO 2011/129987

(56) References cited:
- WO-A2-2007/002398
- US-A1- 2005 216 527
- US-A1- 2009 288 084
- US-A1- 2010 011 178
- US-A1- 2010 011 178
- US-A1- 2010 077 165
- US-B1- 7 533 229

## Description

### BACKGROUND

Virtual machines (VMs) may be used to execute a variety of applications at a computing device. For example, VMs may execute database workloads, file sharing workloads, file server workloads, and web server workloads. One or more workloads executed by a VM may be a mission-critical workload at an enterprise. Frequently backing up such a VM may be important to maintain data redundancy at the enterprise. When a VM is shared by computing devices, backup methodologies in certain environments may not be supported, since the VM may incur modifications from multiple computing devices.

US patent 2010/0011178 A1 discloses back-up systems and methods for virtual computer environments. Snapshots of the system, taken at different times, are used to update a back-up by only considering changes that were applied to the virtual machine disc files.

Further, US patent 2010/0077165 A1 also discloses taking snapshots of protected storage volumes. Here, two snapshots are taken at the beginning of consecutive back-up intervals. The user can decide, before beginning the back-up procedure, whether he wants the back-up to be executed on a block level or on a file level. This setting will be maintained throughout the complete back-up procedure.

Further, US patent number US 2009/0288084 A1 discloses a multi-tenant virtual machine infrastructure that allows multiple tenants to independently access and use a plurality of virtual computing resources via the internet. The provided infrastructure supports the development of virtual data centers, wherein each virtual data center comprises one or more virtual machines, capable of transparently interfacing among themselves and with computing resources located elsewhere in the internet. This allows users accessing the infrastructure to be able to export the entire infrastructure using a standard web browser running on a personal client machine, without having to install any specialized applications on the client machine.

### SUMMARY

The present disclosure describes backup methods to achieve fast and complete backups (i.e., "express-full") backups of a virtual machine that is shared between multiple computing devices in a cluster. As an example, each computing device in the cluster may modify the shared virtual machine via a direct input/output (I/O) transaction, bypassing a file-system stack. The backup methods of the present disclosure may reduce an amount of data transferred during a backup operation and may enable granular recovery at a backup device (e.g., a backup server). For example, the backup methods may enable express-full backups of Hyper-V virtual machines in a cluster shared volume (CSV) environment.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method in accordance with the invention is defined in the appended independent claim 1.

### BRIEF DESCRIPTION OF THE DRAWINGS

FIG. 1 is a diagram to illustrate a particular embodiment of an express-full backup system;
FIG. 2 is a diagram to illustrate another particular embodiment of an express-full backup system;
FIG. 3 is a flow diagram to illustrate a particular embodiment of a method of express-full backup;
FIG. 4 is a flow diagram to illustrate another particular embodiment of a method of express-full backup;
FIG. 5 is a flow diagram to illustrate another particular embodiment of a method of express-full backup;
FIG. 6 is a flow diagram to illustrate another particular embodiment of a method of express-full backup; and
FIG. 7 is a block diagram of a computing environment including a computing device operable to support embodiments of computer-implemented methods, computer program products, and system components as illustrated in FIGS. 1-6.

### DETAILED DESCRIPTION

In a particular embodiment, a computer-implemented method includes creating a first snapshot of at least one virtual machine (VM) at a first time. The first snapshot is created at a computing device of a cluster of computing devices configured to share the at least one virtual machine. The first snapshot is transmitted to a backup device such as a backup server. The method includes creating a second snapshot of the at least one virtual machine at a second time and determining a set of changed data blocks associated with a difference between the second snapshot and the first snapshot. The set of changed blocks is transmitted to the backup device. In one embodiment, the first snapshot is created at a virtual machine level and the second snapshot is created at a computing device level. For example, the at least one VM may include a volume filter that tracks changes of one or more volumes of the at least one VM after the first snapshot is created.

In another particular embodiment, a computer-implemented method includes creating a first snapshot of a virtual machine (VM) comprising a virtual hard drive (VHD). A first differencing virtual hard drive captures modifications to the virtual hard drive after the first snapshot is created. The first snapshot is created at a computing device of a cluster of computing devices, where the cluster is configured to share the virtual machine. The method includes creating a shadow copy of the virtual hard drive and transmitting a copy of the virtual hard drive and the first differencing virtual hard drive to a backup device.

In another particular embodiment, a computer-readable medium is disclosed that includes instructions that are executable by a computing device. The computing device generates a start transaction message indicating that a file of a virtual machine shared via a cluster shared volume (CSV) is open for a direct input/output (IO) transaction. The computing device sets a dirty flag of the virtual machine in response to the start transaction message. The computing device generates one or more bitmasks (e.g., direct IO bitmasks) identifying blocks of the file modified during the direct IO transaction. In a particular embodiment, a File System Filter driver (e.g., a CSV filter) generates at least one of the bitmasks. The computing device sends the one or more bitmasks to a backup device records one or more changes to the virtual machine based on the one or more bitmasks. The computing device generates an end transaction message indicating that the direct IO transaction is complete and clears the dirty flag in response to the end transaction message.

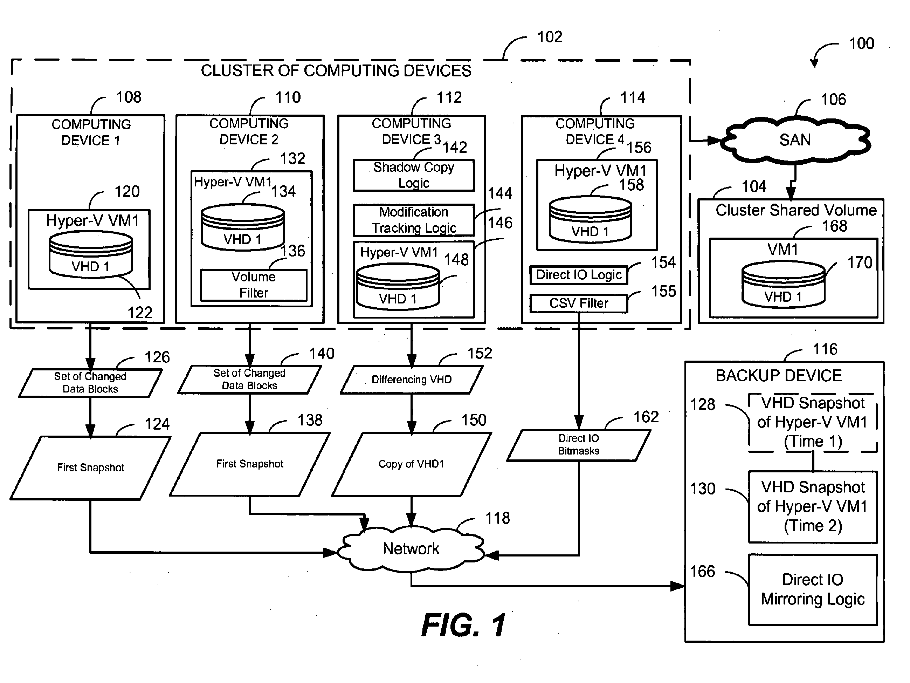

Referring to FIG. 1, a particular illustrative embodiment of an express-full backup system is illustrated, at 100. The system 100 includes a cluster of computing devices 102 coupled to a cluster shared volume (CSV) 104 via a storage area network (SAN) 106. In the embodiment illustrated, the cluster of computing devices 102 includes a first computing device 108, a second computing device 110, a third computing device 112, and a fourth computing device 114. In alternative embodiments, the cluster of computing devices 102 can include any combination of two or more computing devices. The cluster of computing devices 102 is operable to communicate with a backup device 116 (e.g., a backup server) via a network 118. In the embodiment shown, the network 118 is illustrated as different from the SAN 106, in the case where the backup device 116 is remotely located with respect to the cluster of computing devices 102 that shares the CSV 104 via the SAN 106. Alternatively, the network 118 and the SAN 106 may be the same network in the case where the backup device 116 is not remotely located. In FIG. 1, each computing device of the cluster of computing devices 102 is configured to communicate express-full backup data to the backup device 116.

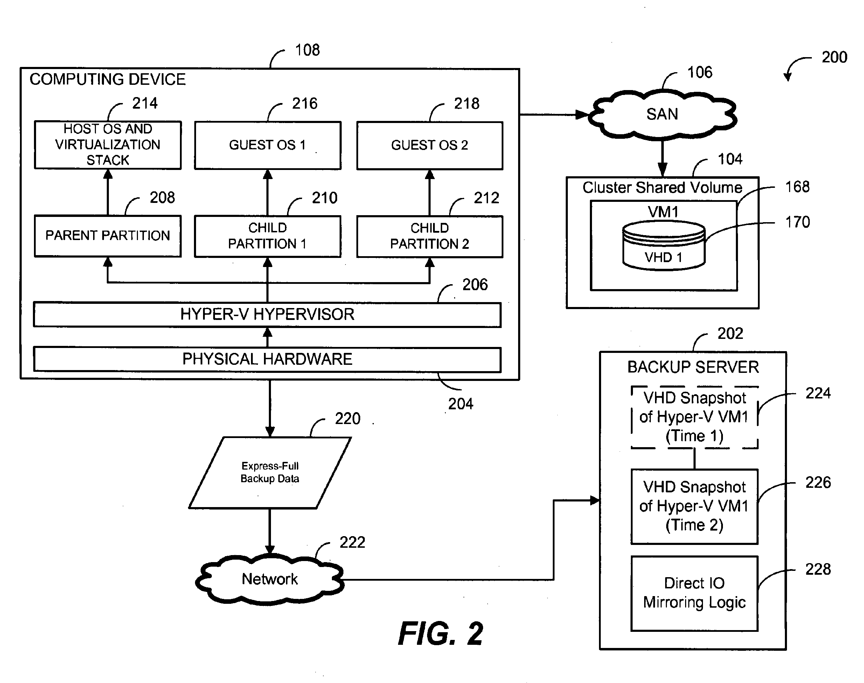

The first computing device 108 is configured to share a first Hyper-V virtual machine (VM) 120 that includes a first virtual hard drive (VHD) 122. To illustrate, the first computing device 108 may include a parent partition configured to execute a host operating system, and the first Hyper-V VM 120 may be executed by the host operating system at a child partition of the first computing device 102 (see FIG. 2 below). At a first time, a first snapshot 124 of the first Hyper-V VM 120 is created. The first computing device 108 communicates the first snapshot 124 to the backup device 116 via the network 118. The first snapshot 124 represents a snapshot of one or more VHDs associated with the first Hyper-V VM 120. In the embodiment illustrated in FIG. 1, the first Hyper-V VM 120 includes the first VHD 122, while in alternative embodiments any number of VHDs may be associated with the first Hyper-V VM 120. The first snapshot 124 may represent a complete initial backup of the first VHD 122. The backup device 116 stores data associated with the first snapshot 124 as a VHD snapshot 128 of the first Hyper-V VM 120 at the first time.

The first computing device 108 creates a second snapshot of the first Hyper-V VM 120 at a second time (e.g., a time after the creation of the first snapshot 124). A set of changed data blocks 126 is associated with a difference between the second snapshot and the first snapshot 124. Thus, the first computing device 108 may store the first snapshot 124 taken at the first time to determine the set of changed data blocks 126. Alternatively, the first computing device 108 may use network communication and the VHD snapshot 128 at the backup device 116 to determine the set of changed data blocks 126. In one embodiment, an application at the first computing device 108 (e.g., a backup application) invokes an application programming interface (API) to determine the set of changed data blocks 126 from the SAN 106. For example, the API may determine a start offset and an end offset for each changed block in the set of changed data blocks 126. In one embodiment, the first computing device 108 may no longer store the first snapshot 124 created at the first time after the set of changed data blocks 126 is determined (e.g., to save storage space at the first computing device 108). The first computing device 108 may store the second snapshot to determine another set of changed data blocks associated with a difference between the second snapshot and a third snapshot taken at a third time.

The first computing device 108 transmits the set of changed data blocks 126 to the backup device 116. The backup device 116 is configured to update the VHD snapshot 128 of the first Hyper-V VM 120 based on the set of changed data blocks 126 to generate another VHD snapshot 130 of the first Hyper-V VM 120. In one embodiment, the backup device 116 may no longer store the VHD snapshot 128 of the first Hyper-V VM 120 upon generation of the VHD snapshot 130 of the first Hyper-V VM 120 (e.g., to save storage space at the backup device 116). In the embodiment illustrated, the amount of data transmitted as the set of changed data blocks 126 is less than the amount of data transmitted as the first snapshot 124. As such, the set of changed data blocks 126 may represent an express-full backup of the first VHD 122 of the first Hyper-V VM 120. As a result, the amount of data transferred from the first computing device 108 to the backup device 116 via the network 118 may be reduced while still maintaining a full backup of the first VHD 122 at the backup device 116.

In one embodiment, the first computing device 108 creates a third snapshot of the first Hyper-V VM 120 at a third time (e.g., a time after the creation of the second snapshot). A second set of changed data blocks is associated with a difference between the third snapshot and the second snapshot. The first computing device 108 transmits the second set of changed data blocks to the backup device 116. The backup device 116 is configured to update the VHD snapshot 130 of the first Hyper-V VM 120 based on the second set of changed data blocks to generate another VHD snapshot of the first Hyper-V VM 120. In one embodiment, the backup device 116 may no longer store the VHD snapshot 130 of the first Hyper-V VM 120 upon generation of the updated VHD snapshot of the first Hyper-V VM 120 (e.g., to save storage space at the backup device 116). Thus, the first computing device 108 may perform periodic backups (e.g., at the second time, at the third time, etc.) to maintain a recent copy of the first VHD 122 at the backup device 116. The time interval between backups may be fixed or may be variable. More frequent backups (e.g., transfers of sets of changed data blocks) may allow the backup device 116 to maintain a more recent copy of the first VHD 122 but may use more computing resources (e.g., at the first computing device 108 and at the backup device 116) and more bandwidth of the network 118. As such, the time interval between backups may be adjusted to balance utilization of computing resources and network resources with backup maintenance of the first VHD 122 at the backup device 116.

Each computing device of the cluster of computing devices 102 may share the first Hyper-V VM 120. That is, each of the computing devices 108, 110, 112, and 114 may own the first Hyper-V VM 120 at different times. When the second computing device 110 is the owner, the first Hyper-V VM 120 may be migrated to the second computing device 110 (e.g., as illustrated by the first Hyper-V VM 132). Similarly, when the third computing device 112 is the owner, the first Hyper-V VM 120 may be migrated to the third computing device 112 (e.g., as illustrated by the first Hyper-V VM 146), and when the fourth computing device 114 is the owner, the first Hyper-V VM 120 may be migrated to the fourth computing device 114 (e.g., as illustrated by the first Hyper-V VM 156). The second computing device 110 is configured to share a first Hyper-V virtual machine (VM) 132 that includes a first virtual hard drive (VHD) 134. At a first time, a first snapshot 138 of the first Hyper-V VM 132 is created. It should be noted that the first snapshot 138 associated with the second computing device 110 may be created at the same time as the first snapshot 124 associated with the first computing device 108. Alternatively, the first snapshot 138 associated with the second computing device 110 may be created at a different time. Thus, the first time associated with the first computing device 108 may be the same as the first time associated with the second computing device 110 or may be different from the first time associated with the second computing device 110. In a particular embodiment, the first snapshot 138 is created at a VM level (e.g., at the level of the first Hyper-V VM 132). Initial snapshots may be created and transmitted for each of a plurality of VMs at the second computing device 110.

The second computing device 110 communicates the first snapshot 138 to the backup device 116 via the network 118. The second computing device 110 creates a second snapshot of the first Hyper-V VM 132 at a second time (e.g., after the creation of the first snapshot 138). The second snapshot may be created at a computing device level (e.g., at the level of the second computing device 110). Thus, subsequent snapshots at the second computing device 110 may include information for each of a plurality of VMs at the second computing device 110. The second computing device 110 communicates the first snapshot 138 to the backup device 116 via the network 118. The backup device 116 stores data.associated with the first snapshot 138 as the VHD snapshot 128 of the first Hyper-V VM 132 at the first time.

In the embodiment illustrated in FIG. 1, the first Hyper-V VM 132 at the second computing device 110 includes a volume filter 136 that tracks changes at the first Hyper-V VM 132 after the first snapshot 138 is created. A set of changed data blocks 140 is determined by querying the volume filter 136 for a volume bit map that identifies the set of changed data blocks 140. Thus, the second computing device 110 may not store the first snapshot 138 taken at the first time for use in determining the set of changed data blocks 140. Rather, the volume filter 136 may dynamically track changes at the first Hyper-V VM 132 after the first snapshot 138 is created. As such, use of the volume filter 136 at the second computing device 110 may result in a reduction of storage space compared to the first computing device 108 that may store the first snapshot 124 in order to determine the set of changed data blocks 126 associated with a difference between the first snapshot 124 and a second snapshot. The volume filter 136 may enable the second computing device 110 to determine the set of changed data blocks 140 for transmission to the backup device 116 more quickly than the first computing device 108 may determine the set of changed data blocks 126. Dynamic tracking of changes may be associated with increased use of computing resources at the second computing device 110 during the time interval between the first time and the second time. By contrast, the first computing device 108 may use less computing resources during the time interval between the first time and the second time but may use more computing resources at the second time in order to determine the set of changed data blocks 126 associated with a difference between the first snapshot 124 and the second snapshot.

The second computing device 110 transmits the set of changed data blocks 140 to the backup device 116. The backup device 116 is configured to update the VHD snapshot 128 of the first Hyper-V VM based on the set of changed data blocks 140 to generate another VHD snapshot 130 of the first Hyper-V VM 132 at the second time. The backup device 116 may no longer store the VHD snapshot 128 upon generation of the VHD snapshot 130 (e.g., to save storage space at the backup device 116). In the embodiment illustrated, the amount of data transmitted as the set of changed data blocks 140 is less than the amount of data transmitted as the first snapshot 138. As such, the set of changed data blocks 140 may represent an express-full backup of the first VHD 134 of the first Hyper-V VM 132. As a result, the amount of data transferred from the second computing device 110 to the backup device 116 via the network 118 may be reduced while still maintaining a full backup of the first VHD 134 at the backup device 116. Furthermore, once initial snapshots are transmitted to the backup device 116, multiple VMs may be backed up at the host level of the second computing device 110 without taking individualized snapshots of each VM at the second computing device 110.

The third computing device 112 is configured to share a first Hyper-V VM 146 that includes a first VHD 148. The third computing device 112 includes shadow copy logic 142 and modification tracking logic 144. The modification tracking logic 144 creates a first snapshot of the first Hyper-V VM 146. A first differencing virtual hard drive 152 captures modifications to the first VHD 148 made after the first snapshot is created. The shadow copy logic 142 creates a shadow copy of the first VHD 148. A copy 150 of the first VHD 148 is transmitted to the backup device 116 via the network 118 and the shadow copy of the first VHD 148 is stored at the third computing device 112 (e.g., as a local read-only backup image of the first VHD 148). The modification tracking logic 144 creates a second snapshot of the first Hyper-V VM 146. A second differencing virtual hard drive (not shown) captures modifications to the first VHD 148 after the second snapshot is created. The first differencing virtual hard drive 152 is transmitted to the backup device 116 via the network 118.

In a particular embodiment, the shadow copy is a read-only writer-involved copy of the first VHD 148. The backup device 116 may merge the copy 150 of the first VHD 148 with the first differencing VHD 152 to generate an updated copy of the first VHD 148. In one embodiment, the modification tracking logic 144 creates a third snapshot of the first Hyper-V VM 146. A third differencing VHD (not shown) captures modifications to the first VHD 148 after the third snapshot is created. The third differencing VHD may be transmitted to the backup device 116 via the network 118. The backup device 116 may be configured to selectively merge the copy 150 of the first VHD 148 with the first differencing VHD 152 to generate an interim copy of the first VHD 148. The backup device 116 may selectively merge the copy 150 of the first VHD 148 with the first differencing VHD 152 and the second differencing VHD to generate an updated copy of the first VHD 148. The backup device 116 may thus support granular recovery of the first VHD 148.

The fourth computing device 114 is configured to share a first Hyper-V VM 156 that includes a first VHD 158. The fourth computing device 114 includes direct input/output (IO) logic 154 configured to generate a start transaction message and an end transaction message. Further, in the embodiment illustrated in FIG. 1, the fourth computing device 114 includes a cluster shared volume (CSV) filter 155 that is configured to generate one or more direct IO bitmasks 162 and to send the one or more direct IO bitmasks 162 to the backup device 116.

In operation, the direct IO logic 154 generates a start transaction message that indicates that a file of a virtual machine 168 shared via the CSV 104 is open for a direct IO transaction. For example, the virtual machine 168 may be a cluster shared copy of the first Hyper-V VM 156 and a file at the first Hyper-V VM 156 may be open in direct IO mode. The direct IO logic 154 sets a dirty flag of the virtual machine in response to the start transaction message and generates an end transaction message that indicates that the direct IO transaction is complete. The one or more direct IO bitmasks 162 identify blocks of the file that have been modified during the direct IO transaction.

In the embodiment illustrated in FIG. 1, the CSV filter 155 generates the one or more direct IO bitmasks 162 and sends the one or more direct IO bitmasks 162 to the backup device 116. The direct IO logic 154 clears the dirty flag of the virtual machine in response to the CSV filter 155 sending the one or more direct IO bitmasks 162 to the backup device 116. In the embodiment illustrated in FIG. 1, the backup device 116 includes direct IO mirroring logic 166 that records changes to the virtual machine based on the one or more bitmasks 162. For example, the backup device 116 may merge the changed data blocks (e.g., the one or more direct IO bitmasks 162) with the copy of the first Hyper-V VM 156 that is stored at the backup device 116.

In a particular embodiment, the CSV filter 155 sends the one or more bitmasks 162 to the backup device 116 using a file system control (fsctl) message. Further, the CSV filter 155 may periodically send the one or more bitmasks 162 to the backup device 116 based on a user-defined update period (e.g., every sixty seconds). The backup device 116 may store a backup copy of the virtual machine 168 shared via the CSV 104, and the CSV filter 155 may be coupled to an owning computing device of the virtual machine 168 (e.g., coupled to the fourth computing device 114) or may be coupled to each computing device of the cluster of computing devices 102 (e.g., coupled to a system/host volume at each of the computing devices 108, 110, 112, and 114). The express-full backup system 100 of FIG. 1 may reduce an amount of data transferred during a backup operation, may enable granular recovery at the backup device 116, and may allow for express-full backups of Hyper-V virtual machines in an environment that includes the CSV 104.

Referring to FIG. 2, another illustrative embodiment of an express-full backup system is illustrated, at 200. The system 200 includes a computing device 108 operable to access a virtual machine 168 that includes a VHD 170 located at a CSV 104 coupled to a SAN 106. In one embodiment, the computing device 108 is the computing device 108 of FIG. 1, the CSV 104 is the CSV 104 of FIG. 1, the SAN 106 is the SAN 106 of FIG. 1, the VM 168 is the first VM 168 of FIG. 1, and the VHD 170 is the first VHD 170 of FIG. 1. Thus, the computing device 108 of FIG. 2 may represent one of a plurality of computing devices that share a virtual machine located at a CSV. The computing device 108 is operable to transmit express-full backup data 220 to a backup server 202 via a network 222. The network 222 may be different from the SAN 106 or may be the same as the SAN 106. In one embodiment, the backup server 202 is the backup device 116 of FIG. 1 and may update a first snapshot 224 of the VHD 170 of the virtual machine 168 (taken at a first time) with a second snapshot 226 of the VHD 170 (taken at a second time). Further, in the embodiment illustrated in FIG. 2, the backup server 202 includes direct IO mirroring logic 228, such as the direct IO mirroring logic 166 of FIG. 1.

The computing device 108 includes physical hardware 204 (e.g., one or more processors and one or more storage elements) and a Hyper-V Hypervisor 206. The Hyper-V Hypervisor 206 is configured to manage a parent partition 208 and one or more child partitions. In the embodiment illustrated in FIG. 2, the one or more child partitions include a first child partition 210 and a second child partition 212. The parent partition 208 executes a host operating system and a virtualization stack 214. The virtualization stack 214 runs in the parent partition 208 and has direct access to the physical hardware 204 of the computing device 108. The parent partition 208 may create one or more child partitions that each host a guest operating system. In the embodiment illustrated in FIG. 2, the parent partition 208 creates the first child partition 210 that executes a first guest operating system 216, and the parent partition 208 creates the second child partition 212 that executes a second guest operating system 218. The parent partition 208 creates the child partitions 210, 212 using a hypercall application programming interface (API).

A virtualized partition (e.g., the child partitions 210, 212) may not have access to physical processor(s) at the computing device 108 and may not handle real interrupts. Instead, the first child partition 210 and the second child partition 212 may have a virtual view of the processor(s) and may run in a guest virtual address space. Depending on configuration, the hypervisor 206 may not use an entire virtual address space at the computing device 108. The hypervisor 206 may instead expose a subset of the address space of the processor(s) to each of the child partitions 210, 212. The hypervisor 206 may handle interrupts to the processor(s) and may redirect the interrupts to the appropriate child partition using a logical Synthetic Interrupt Controller (SynIC). Address translation between various guest virtual address spaces may be hardware accelerated by using an IO Memory Management Unit (IOMMU) that operates independently of memory management hardware used by the physical processor(s).

The child partitions 210, 212 may not have direct access to the physical hardware 204 of the computing device 108. Instead, the child partitions 210, 212 may each have a virtual view of the physical hardware 204 (e.g., in terms of virtual devices). A request to the virtual devices may be redirected via a VMBus to devices in the parent partition 208 that manages the requests. The VMBus may be a logical channel that enables inter-partition communication (e.g., communication between the parent partition 208 and the child partitions 210, 212). A response may also be redirected via the VMBus. If the devices in the parent partition 208 are also virtual devices, the response may be redirected further within the parent partition 208 in order to gain access to the physical hardware 204. The parent partition 208 may execute a Virtualization Service Provider (VSP), connected to the VMBus, to handle device access requests from the child partitions 210, 212. Child partition virtual devices may internally execute a Virtualization Service Client (VSC) to redirect requests to VSPs in the parent partition 208 via the VMBus. The access process may be transparent to the guest operating systems 216, 218.

In a particular embodiment, a host operating system at a computing device may support multiple virtual machines, where each virtual machine has a different operating system than the host operating system. When backing up the virtual machines, it may be preferable to perform the backups at a host level instead of at a guest level. For example, backing up virtual machines using a backup application executing at the host level may be faster than backing up individual virtual machines using a backup application at each of the individual virtual machines. When virtual machines are in a cluster shared environment, backup operations for the virtual machines may be modified to maintain data integrity and data concurrency across multiple copies of the virtual machines.

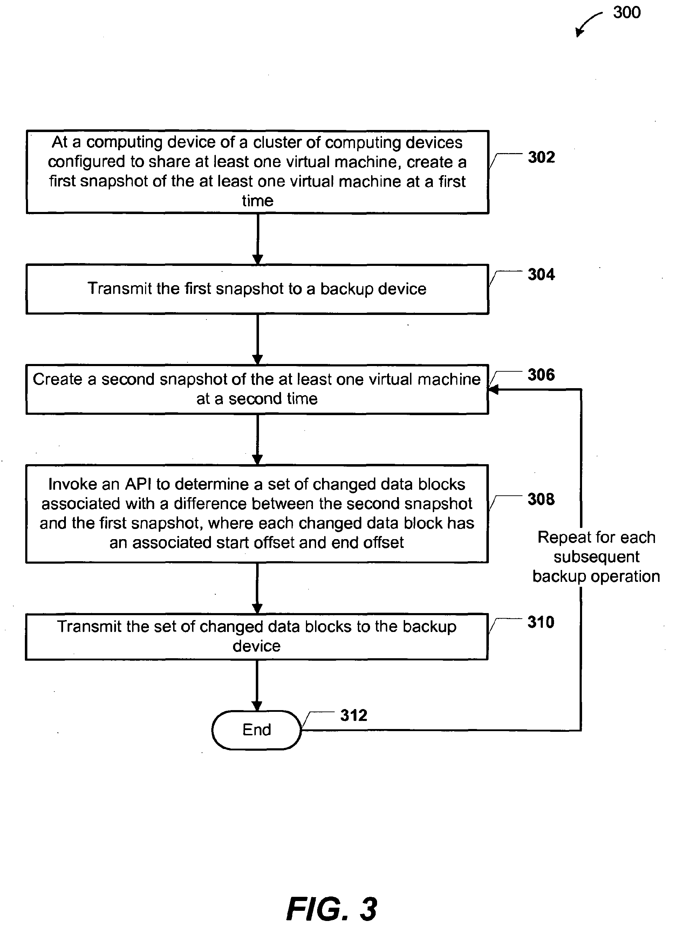

FIG. 3 is a flow diagram of a particular embodiment of a method 300 of backing up a cluster shared virtual machine. In an illustrative embodiment, the method 300 may be performed by the first computing device 108 of FIG. 1.

The method 300 includes, at a computing device of a cluster of computing devices configured to share at least one virtual machine, creating a first snapshot of at least one virtual machine at a first time, at 302. For example, in FIG. 1, the first computing device 108 may create the first snapshot 124 of the first Hyper-V VM 120.

The method 300 also includes transmitting the first snapshot to a backup device, at 304. For example, in FIG. 1, the first computing device 108 may transmit the first snapshot 124 to the backup device 116 via the network 118. The method 300 further includes creating a second snapshot of the at least one virtual machine at a second time, at 306. For example, in FIG. 1, the first computing device 108 may create a second snapshot of the first Hyper-V VM 120.

The method 300 includes determining a set of changed data blocks associated with a difference between the second snapshot and the first snapshot, at 308. In a particular embodiment, an API may be invoked to determine the set of changed data blocks from a SAN, where each changed data block has an associated start offset and end offset. The API may be provided by a host operating system at the computing device or may be provided by a third party (e.g., a vendor of a storage area network). For example, in FIG. 1, the set of changed data blocks 126 may be determined.

The method 300 also includes transmitting the changed data blocks to the backup device, at 310. For example, in FIG. 1, the set of changed data blocks 126 may be transmitted to the backup device 116 via the network 118. The method 300 may iteratively return, to 306, for each subsequent backup operation. The method 300 ends, at 312.

It will be appreciated that the method 300 of FIG. 3 may enable fast backup of cluster shared virtual machines. For example, after an initial copy of a virtual machine is backed up, subsequent backup operations may involve transmitting only changed data blocks instead of all data blocks of the virtual machine. It will also be appreciated that the method 300 of FIG. 1 may be performed without change-tracking overhead between backup operations.

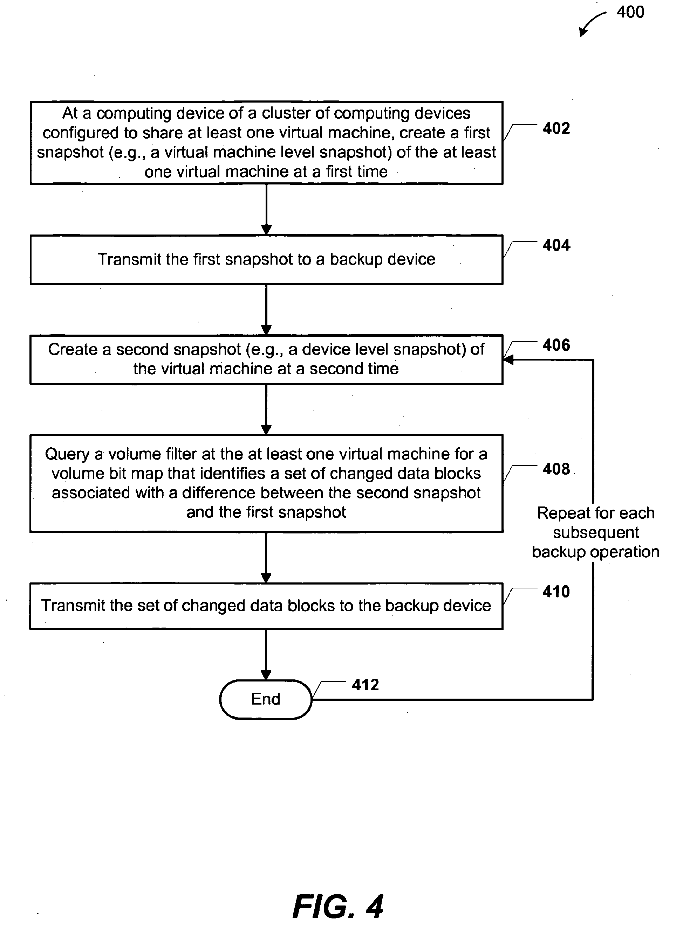

FIG. 4 is a flow diagram of another particular embodiment of a method 400 of backing up a cluster shared virtual machine. In an illustrative embodiment, the method 400 may be performed by the second computing device 110 of FIG. 1.

The method 400 includes, at a computing device of a cluster of computing devices configured to share at least one virtual machine, creating a first snapshot of at least one virtual machine at a first time, at 402. In a particular embodiment, the first snapshot is taken at a virtual machine level (e.g., the first snapshot may include data of the at least one virtual machine). For example, in FIG. 1, the second computing device 110 may create the first snapshot 138 of the first Hyper-V VM 132.

The method 400 also includes transmitting the first snapshot to a backup device, at 404. For example, in FIG. 1, the second computing device 110 may transmit the first snapshot 138 to the backup device 116 via the network 118. The method 400 further includes creating a second snapshot of the at least one virtual machine at a second time, at 406. In a particular embodiment, the second snapshot is taken at a device level (e.g., the second snapshot may include data of each of a plurality of virtual machines present at the computing device). For example, in FIG. 1, the second computing device 110 may create a second snapshot of the first Hyper-V VM 132.

The method 400 includes determining a set of changed data blocks based on a difference between the second snapshot and the first snapshot, at 408. In a particular embodiment, a volume filter at the at least one virtual machine may be queried for a volume bit map that identifies the set of changed data blocks. The volume filter may be installed by a backup application executing at a host level of the computing device. For example, in FIG. 1, the volume filter 136 may be queried for a volume bit map to identify the set of changed data blocks 140.

The method 400 also includes transmitting the changed data blocks to the backup device, at 410. In a particular embodiment, the set of changed data blocks is used to overwrite an existing copy of the virtual machine at the backup device. For example, in FIG. 1, the set of changed data blocks 140 may be transmitted to the backup device 116 via the network 118. The method 400 may iteratively return, to 406, for each subsequent backup operation. The method 400 ends, at 412.

It will be appreciated that the method 400 of FIG. 4 may enable fast backup of cluster shared virtual machines. For example, after an initial copy of a virtual machine is backed up, subsequent backup operations may involve transmitting changed data blocks instead of all data blocks of the virtual machine. It will also be appreciated that the use of a volume filter in the method 400 of FIG. 4 may enable rapid determination of changed data blocks at the virtual machine.

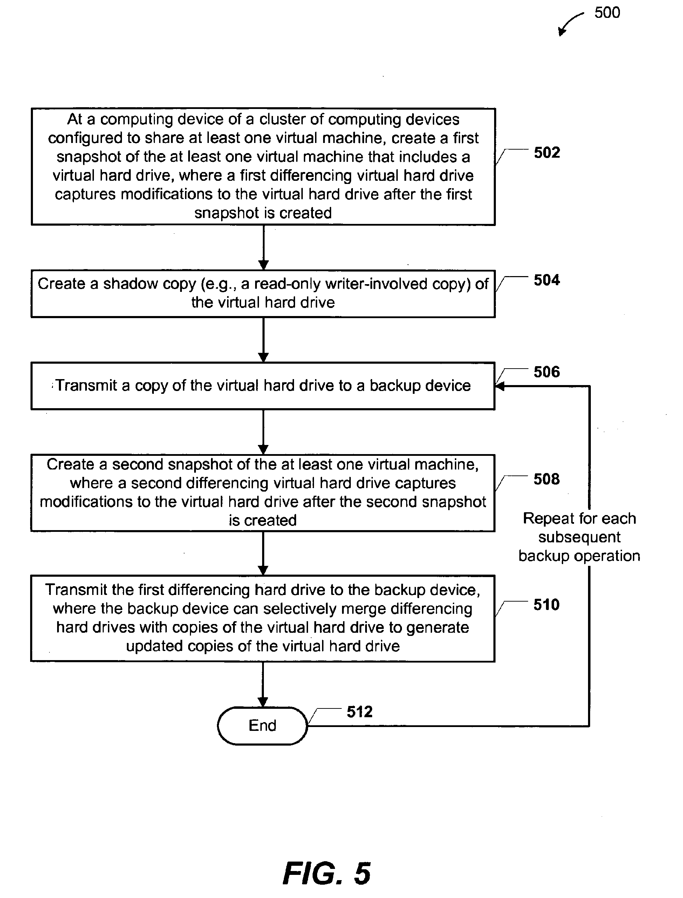

FIG. 5 is a flow diagram of another particular embodiment of a method 500 of backing up a cluster shared virtual machine. In an illustrative embodiment, the method 500 may be performed by the third computing device 112 of FIG. 1.

The method 500 includes, at a computing device of a cluster of computing devices configured to share at least one virtual machine, creating a first snapshot of the at least one virtual machine, at 502. The virtual machine includes a virtual hard drive (VHD) and creating the first snapshot generates a first differencing VHD to indicate modifications to the VHD after the first snapshot is created. For example, in FIG. 1, the third computing device 112 may create a first snapshot of the first Hyper-V VM 146 to generate the first differencing VHD 152.

The method 500 also includes creating a shadow copy of the VHD, at 504. In a particular embodiment, the shadow copy is a read-only writer-involved copy of the VHD. For example, in FIG. 1, the shadow copy logic 142 may create a shadow copy of the first VHD 148.

The method 500 further includes transmitting a copy of the VHD to a backup device, at 506. For example, in FIG. 1, the third computing device 112 may transmit the copy 150 of the first VHD 148 to the backup device 116 via the network 118.

The method 500 includes creating a second snapshot of the at least one virtual machine to generate a second differencing VHD, at 508. For example, in FIG. 1, the third computing device 112 may create a second snapshot of the first Hyper-V VM 146 to create a second differencing VHD.

The method 500 also includes transmitting the first differencing VHD to the backup device, at 510. The backup device can selectively merge differencing VHDs with copies of VHDs to generate updated copies of the VHD. For example, in FIG. 1, the third computing device 112 may transmit the first differencing VHD 152 to the backup device 116 via the network 118. The method 500 may iteratively return, to 506, for each subsequent backup operation. The method 500 ends, at 512.

It will be appreciated that the method 500 of FIG. 5 may enable fast backup of cluster shared virtual machines. For example, after an initial copy of a VHD is transmitted, subsequent backup operations may involve transmitting smaller differencing VHDs. It will also be appreciated that the method 500 of FIG. 5 may enable granular recovery at a backup device. For example, a backup device may selectively merge one or more differencing VHDs with an initial copy of a VHD to generate an updated VHD corresponding to a particular point in time.

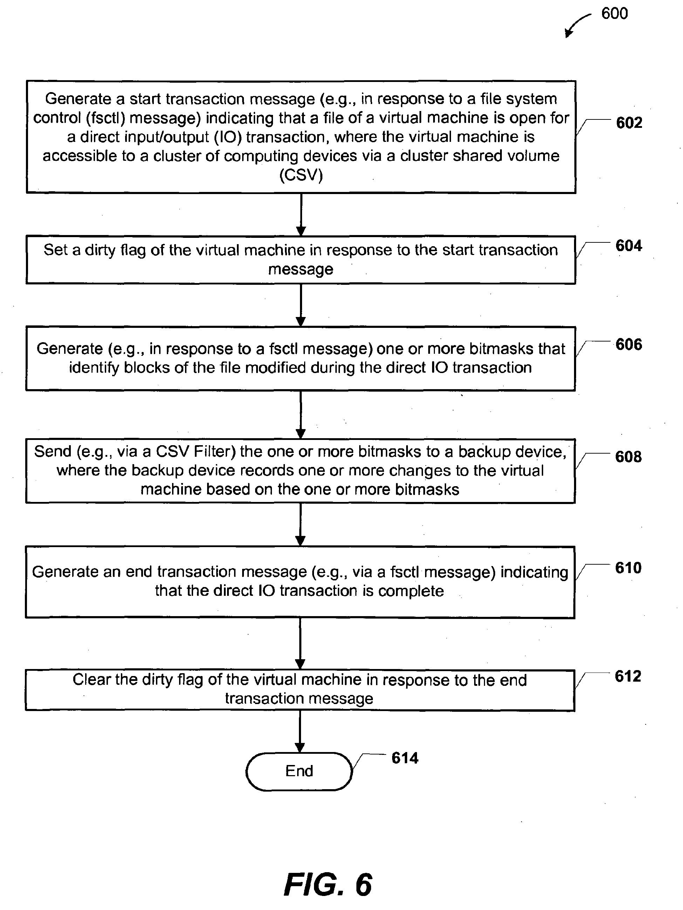

In a particular embodiment, CSV technology used to share virtual machines may provide change-tracking ability for various types of input/output (IO) at the virtual machine except direct input/output (IO). For example, direct IO at the virtual machine may bypass change-tracking in an attempt to increase IO speed. FIG. 6 is a flow diagram of another particular embodiment of a method 600 of backing up a cluster shared virtual machine that undergoes direct IO transactions. In an illustrative embodiment, the method 600 may be performed by the fourth computing device 114 of FIG. 1.

The method 600 includes generating a start transaction message indicating that a file of a virtual machine is open for a direct input/output (IO) transaction, at 602. The virtual machine is accessible to a cluster of computing devices via a cluster shared volume (CSV). For example, in FIG. 1, the direct IO logic 154 of the fourth computing device 114 may generate a start transaction message. In a particular embodiment, the start transaction message is generated in response to a file system control (fsctl) message (e.g., "FSCTL_START_CSV_DIRECTIO"). In FIG. 1, the first Hyper-V VM 156 at the fourth computing device 114 is accessible to the cluster of computing devices 102 via the CSV 104.

The method 600 also includes setting a dirty flag of the virtual machine in response to the start transaction message, at 604. For example, in FIG. 1, the direct IO logic 154 may set a dirty flag of the first Hyper-V VM 156 that is shared via the CSV 104. In a particular embodiment, the dirty flag is used to signal to clients of the CSV 104 that certain data at the CSV 104 may be dirty (e.g., inconsistent due to a direct IO transaction that has not yet been mirrored).

The method 600 further includes generating one or more bitmasks (e.g., using a CSV filter) that identify blocks of the file that are modified during the direct IO transaction, at 606. For example, the one or more direct IO bitmasks 162 of FIG. 1 may be generated by the CSV filter 155. The CSV filter may be coupled to an owning computing device of the virtual machine or may be coupled to each computing device of the cluster (e.g., at a system volume of each computing device). In a particular embodiment, the one or more bitmasks are generated in response to a fsctl message (e.g., "FSCTL_PROCESS_CSV_DIRECTIO").

The method 600 includes sending the one or more bitmasks to a backup device, at 608. The backup device updates the virtual machine based on the received bitmasks. For example, the CSV filter 155 of FIG. 1 may send the one or more direct IO bitmasks 162 to the backup device 116. The direct IO mirroring logic 166 of the backup device 116 may update the first VHD snapshot 128 based on the direct IO bitmasks 162, thereby transforming the first VHD snapshot 128 into the second VHD snapshot 130. In a particular embodiment, the one or more bitmasks are periodically sent to the backup device (e.g., based on a user-defined update period). As an illustrative example, the CSV filter 155 of FIG. 1 may send the one or more direct IO bitmasks 162 to the backup device 116 once per minute.

The method 600 further includes generating an end transaction message indicating that the direct IO transaction is complete, at 610. For example, in FIG. 1, the direct IO logic 154 of the fourth computing device 114 may generate an end transaction message. In a particular embodiment, the END transaction message is generated in response to a fsctl message (e.g., "FSCTL_END_CSV_DIRECTIO").

The method 600 includes clearing the dirty flag of the virtual machine in response to the end transaction message, at 612. For example, in FIG. 1, the direct IO logic 154 may clear the dirty flag. The method 600 may be concurrently executed for each file open in direct IO mode. For example, the method 600 may be placed within a direct IO software code path. The method 600 ends, at 614.

It will be appreciated that the method 600 of FIG. 6 may enable fast message-based backup of cluster shared virtual machines. It will further be appreciate that because CSV may allow virtual machine ownership to be migrated between various computing devices in a cluster, the method 600 of FIG. 6 may achieve backup support across a cluster by coupling a CSV filter to each computing device of the cluster.

In a particular embodiment, a CSV filter coupled to a system volume of each computing device of a cluster maintains separate contexts (e.g., bitmasks) for each computing device. To reduce a number of file updates, the CSV filter may implement reference counting on start and end direct IO fsctls. For example, a bitmask may not be saved until the reference count has reached zero. In another particular embodiment where the CSV filter is coupled to just the owning node, when ownership of a virtual machine is transferred, dismounting of the virtual machine causes tear-down (e.g., deallocation) of the CSV filter. During tear-down, existing bitmasks and metadata may be saved so that the bitmasks and metadata can be migrated to a new owner of the virtual machine.

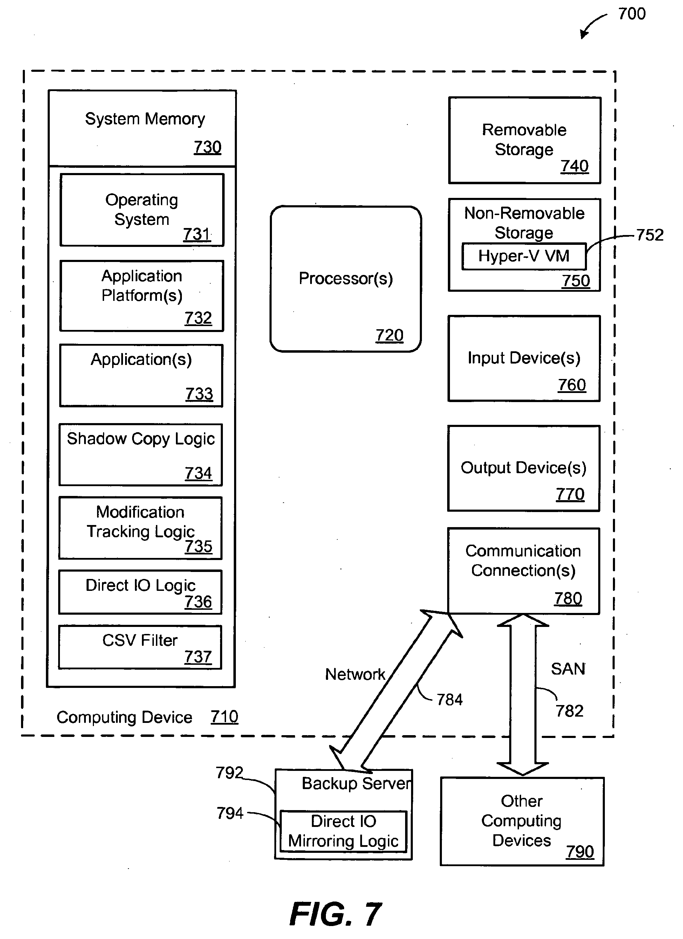

FIG. 7 depicts a block diagram of a computing environment 700 including a computing device 710 operable to support embodiments of computer-implemented methods, computer program products, and system components according to the present disclosure. One or more of the computing devices 108, 110, 112, and 114 of FIG. 1, the backup device 116 of FIG. 1, the CSV 104 of FIG. 1, the computing device 108 of FIG. 2, the backup server 202 of FIG. 2, and the CSV 104 of FIG. 2, or components thereof, may be implemented by or included in the computing device 710 or components thereof.

The computing device 710 includes at least one processor 720 and a system memory 730. Depending on the configuration and type of computing device, the system memory 730 may be volatile (such as random access memory or "RAM"), non-volatile (such as read-only memory or "ROM," flash memory, and similar memory devices that maintain stored data even when power is not provided), or some combination of the two. The system memory 730 typically includes an operating system 731, one or more application platforms 732, one or more applications 733, and program data. In an illustrative embodiment, the system memory 730 further includes shadow copy logic 734, modification tracking logic 735, direct IO logic 736, and a CSV filter 737. For example, one or more of the shadow copy logic 734, the modification tracking logic 735, and the direct IO logic 736 may be present in a backup software application at the computing device 710. In an illustrative embodiment, the shadow copy logic 734 includes the shadow copy logic 142 of FIG. 1, the modification tracking logic 735 includes the modification tracking logic 144 of FIG. 1, the direct IO logic 736 includes the direct IO logic 154 of FIG. 1, and the CSV filter 737 includes the CSV filter 155 of FIG. 1.

The computing device 710 may also have additional features or functionality. For example, the computing device 710 may also include removable and/or non-removable additional data storage devices such as magnetic disks, optical disks, tape, and standard-sized or flash memory cards. Such additional storage is illustrated in FIG. 7 by removable storage 740 and non-removable storage 750. Computer storage media may include volatile and/or non-volatile storage and removable and/or non-removable media implemented in any technology for storage of information such as computer-readable instructions, data structures, program components or other data. In an illustrative embodiment, the non-removable storage 750 includes one or more VMs (e.g., an illustrative Hyper-V VM 752). The Hyper-V VM 752 may be any of the Hyper-V VMs 120, 132, 146, or 156 of FIG. 1 (e.g., the Hyper-V VM 752 may be located at a child partition of the non-removable storage 750 and files of the operating system 731 may be located at a parent partition of the non-removable storage 750). The system memory 730, the removable storage 740 and the non-removable storage 750 are all examples of computer storage media. The computer storage media includes, but is not limited to, RAM, ROM, electrically erasable programmable read-only memory (EEPROM), flash memory or other memory technology, compact disks (CD), digital versatile disks (DVD) or other optical storage, magnetic cassettes, magnetic tape, magnetic disk storage or other magnetic storage devices, or any other medium that can be used to store information and that can be accessed by the computing device 710. Any such computer storage media may be part of the computing device 710.

The computing device 710 may also have input device(s) 760, such as a keyboard, mouse, pen, voice input device, touch input device, etc. Output device(s) 770, such as a display, speakers, printer, etc., may also be included. The computing device 710 also contains one or more communication connections 780 that allow the computing device 710 to communicate with other computing devices 790 over a wired or a wireless network. In an illustrative embodiment, the other computing devices 790 are communicatively coupled to the computing device 710 via a SAN 782. For example, the SAN 782 may be the SAN 106 of FIG. 1. In another illustrative embodiment, the computing device 710 may be communicatively coupled to a backup server 792 via a network 784. The backup server 792 may include the backup device 116 of FIG. 1 or the backup server 202 of FIG. 2. Direct IO mirroring logic 794 at the backup server 792 may include the direct IO mirroring logic 166 of FIG. 1 or the direct IO mirroring logic 228 of FIG. 2.

It will be appreciated that not all of the components or devices illustrated in FIG. 7 or otherwise described in the previous paragraphs are necessary to support embodiments as herein described. For example, the removable storage 740 may be optional.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Accordingly, the disclosure and the figures are to be regarded as illustrative rather than restrictive.

Those of skill would further appreciate that the various illustrative logical blocks, configurations, modules, and process steps or instructions described in connection with the embodiments disclosed herein may be implemented as electronic hardware or computer software. Various illustrative components, blocks, configurations, modules, or steps have been described generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The steps of a method described in connection with the embodiments disclosed herein may be embodied directly in hardware, in a software module executed by a processor, or in a combination of the two. A software module may reside in computer readable media, such as random access memory (RAM), flash memory, read only memory (ROM), registers, a hard disk, a removable disk, a CD-ROM, or any other form of storage medium known in the art. An exemplary storage medium is coupled to a processor such that the processor can read information from, and write information to, the storage medium. In the alternative, the storage medium may be integral to the processor or the processor and the storage medium may reside as discrete components in a computing device or computer system.

Although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments.

The Abstract of the Disclosure is provided with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments.

The previous description of the embodiments is provided to enable a person skilled in the art to make or use the embodiments. Various modifications to these embodiments will be readily apparent to those skilled in the art, and the generic principles defined herein may be applied to other embodiments without departing from the scope of the disclosure. Thus, the present disclosure is not intended to be limited to the embodiments shown herein but is to be accorded the widest scope possible consistent with the principles and novel features as defmed by the following claims.

## Claims

1. A computer-implemented method, comprising:
at a computing device of a cluster of computing devices (108,110,112,114) configured to share at least one virtual machine (120,132,146,156,168), creating a first snapshot of at least one virtual machine at a first time;
transmitting the first snapshot to a backup device (116),
creating a second snapshot of the at least one virtual machine (120,132,146,156,168) at a second time;
determining a set of changed data blocks associated with a difference between the second snapshot and the first snapshot; and
transmitting the set of changed data blocks to the backup device (116),
**characterized in that** the first snapshot is created at a virtual machine level and the second snapshot is created at a computing device level.

2. The method of claim 1, wherein the computing device comprises a parent partition to execute a host operating system, and wherein the at least one virtual machine is executed by the host operating system at a child partition of the computing device.

3. The method of claim 1, wherein the cluster of computing devices share the at least one virtual machine via a cluster shared volume (CSV) coupled to a storage area network (SAN).

4. The method of claim 3, wherein an application at the computing device invokes an application programming interface (API) to determine the set of changed data blocks from the SAN.

5. The method of claim 4, wherein the API determines a start offset and an end offset for each changed data block in the set of changed data blocks.

6. The method of claim 1, further comprising:
creating a third snapshot of the at least one virtual machine at a third time;
determining a second set of changed data blocks associated with a difference between the third snapshot and the second snapshot; and
transmitting the second set of changed data blocks to the backup device.

7. The method of claim 1, wherein the first snapshot includes a snapshot of one or more virtual hard drives (VHDs) associated with the at least one virtual machine.

8. The method of claim 1, wherein the at least one virtual machine comprises a volume filter that tracks changes of one or more volumes of the at least one virtual machine after the first snapshot is created.

9. The method of claim 8, wherein the set of changed data blocks is determined by querying the volume filter for a volume bit map that identifies the set of changed data blocks.

## Patentansprüche

1. Ein Computer-implementiertes Verfahren, umfassend:
in einem digitalen Gerät eines Clusters von digitalen Geräten (108, 110, 112, 114), die ausgebildet sind, um zumindest eine virtuelle Maschine (120, 132, 146, 156, 168) zu teilen, Erstellen eines ersten Speicherauszugs von wenigstens einer virtuellen Maschine zu einer ersten Zeit;
Senden des ersten Speicherauszugs zu einem Backupgerät (116),
Erstellen eines zweiten Speicherauszugs, der wenigstens einen virtuellen Maschine (120, 132, 146, 156, 168) zu einer zweiten Zeit;
Bestimmen eines Satzes geänderter Datenblöcke, die mit einer Abweichung zwischen dem ersten Speicherauszug und dem zweiten Speicherauszug in Verbindung stehen; und
Senden des Satzes von geänderten Datenblöcken zum Backupgerät (116),
dadurch charakterisiert, dass der erste Speicherauszug auf einem Level einer virtuellen Maschine und der zweite Speicherauszug auf einem Gerätelevel erstellt wird.

2. Verfahren nach Anspruch 1, wobei das digitale Gerät wenigstens eine Stammpartition zum Ausführen eines Host-Betriebssystems umfasst, und wobei die wenigstens eine virtuelle Maschine durch das Host-Betriebssystem auf einer Teilpartition des digitalen Geräts ausgeführt wird.

3. Verfahren nach Anspruch 1, wobei der Cluster von digitalen Geräten wenigstens die eine virtuelle Maschine durch ein Cluster-shared-Volume (CSV), das mit einem Storage-Area-Network (SAN) verbunden ist, teilt.

4. Verfahren nach Anspruch 3, wobei eine Anwendung auf dem digitalen Gerät ein Anwendungsprogrammierinterface (API) aufruft, um den Satz von geänderten Datenblöcken von dem SAN zu bestimmen.

5. Verfahren nach Anspruch 4, wobei das API einen Startversatz und einen Endversatz für jeden geänderten Datenblock in dem Satz von geänderten Datenblöcken bestimmt.

6. Verfahren nach Anspruch 1, weiterhin umfassend:
Erstellen eines dritten Speicherauszugs von der wenigstens einen virtuellen Maschine zu einer dritten Zeit;
Bestimmen eines zweiten Satzes von geänderten Datenblöcken, die mit einer Abweichung zwischen dem dritten Speicherauszug und dem zweiten Speicherauszug in Verbindung stehen; und
Senden des zweiten Satzes von geänderten Datenblöcken zum Backupgerät.

7. Verfahren nach Anspruch 1, wobei der erste Speicherauszug einen Speicherauszug von einer oder mehreren virtuellen Festplatten (VHDs), die mit der wenigstens einen virtuellen Maschine in Verbindung stehen, umfasst.

8. Verfahren nach Anspruch 1, wobei die wenigstens eine virtuelle Maschine einen Datenträgerfilter umfasst, der Veränderungen auf einem oder mehreren Datenträgern der wenigstens einen virtuellen Maschine nach Erstellen des ersten Speicherauszugs verfolgt.

9. Verfahren nach Anspruch 8, wobei der Satz von veränderten Datenblöcken durch Anfragen des Datenträgerfilters nach einer Volume-Bitmap, die den Satz geänderter Datenblöcke identifiziert, bestimmt wird.

## Revendications

1. Procédé informatisé, consistant à :
- au niveau d'un dispositif informatique d'un groupe de dispositifs informatiques (108, 110, 112, 114) configurés pour partager au moins une machine virtuelle (120, 132, 146, 156, 168), créer un premier instantané d'au moins une machine virtuelle à un premier instant ;
- transmettre le premier instantané à un dispositif de sauvegarde (116) ;
- créer un second instantané de l'au moins une machine virtuelle (120, 132, 146, 156, 168) à un deuxième instant ;
- déterminer un ensemble de blocs de données modifiés associé à une différence entre le deuxième instantané et le premier instantané ; et
- transmettre l'ensemble de blocs de données modifiés au dispositif de sauvegarde (116),
- **caractérisé en ce que** le premier instantané est créé au niveau d'une machine virtuelle et que le deuxième instantané est créé au niveau d'un dispositif informatique.

2. Procédé selon la revendication 1, pour lequel le dispositif informatique comprend une partition parente pour exécuter un système d'exploitation hôte et pour lequel l'au moins une machine virtuelle est exécutée par le système d'exploitation hôte à un niveau de partition héritière du dispositif informatique.

3. Procédé selon la revendication 1, pour lequel le groupe de dispositifs informatiques partagent l'au moins une machine virtuelle via un volume partagé par le groupe (CSV) couplé à un réseau de zones de stockage (SAN).

4. Procédé selon la revendication 3, pour lequel une application au niveau du dispositif informatique appelle une interface de programmation d'application (API) pour déterminer l'ensemble de blocs de données modifiés à partir du SAN.

5. Procédé selon la revendication 4, pour lequel l'API détermine un décalage de début et un décalage de fin pour chaque bloc de données modifié de l'ensemble de blocs de données modifiés.

6. Procédé selon la revendication 1, consistant, en outre, à :
- créer un troisième instantané de l'au moins une machine virtuelle à un troisième instant ;
- déterminer un second ensemble de blocs de données modifiés associé à une différence entre le troisième instantané et le deuxième instantané ; et
- transmettre le second ensemble de blocs de données modifiés au dispositif de sauvegarde.

7. Procédé selon la revendication 1, pour lequel le premier instantané inclut un instantané d'une ou plusieurs unités de disques durs virtuelles (VHDs) associé à l'au moins une machine virtuelle.

8. Procédé selon la revendication 1, pour lequel l'au moins une machine virtuelle comprend un filtre de volume suivant les modifications d'un ou plusieurs volumes de l'au moins une machine virtuelle après que le premier instantané a été créé.

9. Procédé selon la revendication 8, pour lequel l'ensemble de blocs de données modifiés est déterminant en interrogeant le filtre de volume pour un mappage binaire de volume identifiant l'ensemble de blocs de données modifiés.
